# DEMANDE DE BREVET EUROPEEN

(11) **EP 4 213 133 A1**
(43) Date de publication de la demande: **19.07.2023**
(21) Numéro de dépôt: 23151292.2
(22) Date de dépôt: 12.01.2023
(51) Int. Cl.: G09B 23/28

(54) **APPAREIL DE SIMULATION D'UN CORPS UTÉRIN ATONIQUE**

(30) Priorité: 14.01.2022 FR 2200322
(71) Demandeur: Université Paris Cité, 75006 Paris (FR); Universite Sorbonne Paris Nord, 93430 Villetaneuse (FR); ASSISTANCE PUBLIQUE HOPITAUX DE PARIS, 75004 Paris (FR)
(72) Inventeur: HJORT LARSEN, Nicoline, 75013 PARIS (FR); CECCALDI, Pierre François, 75017 PARIS (FR); LEMARTELEUR, Vincent, 55310 TRONVILLE EN BARROIS (FR); BENOIT, Aurélie, 75014 PARIS (FR); REMINI, Sid-Ahmed, 93390 CLICHY SOUS BOIS (FR)
(74) Mandataire: AtlantIP International

(57) **Abrégé**

Appareil (1) de simulation d'un corps utérin atonique après un accouchement l'appareil (1) comprenant une pièce (2) monobloc, la pièce (2) comprenant :
- un corps souple (11) présentant une forme d'un corps utérin atonique après un accouchement, le corps souple (11) étant pliable à la main de sorte que le corps souple (11) reproduit un comportement haptique d'un corps utérin atonique après un accouchement ;
- un col rigide (9) prolongeant le corps souple (11), le col rigide (9) entourant une ouverture (7) de la pièce (2), le col rigide (9) présentant une rigidité supérieure à une rigidité du corps souple (11) ;

la pièce (2) définissant une surface externe (3) et une surface interne (17), la surface interne (17) définissant une cavité interne (13) de la pièce (2),
la cavité interne (13) débouchant dans la surface externe (3) de sorte à définir l'ouverture (7).

## Description

### DOMAINE DE L'INVENTION

L'invention concerne un appareil de simulation d'un corps utérin atonique, en particulier un corps utérin post-partum susceptible d'hémorragies.

### ETAT DE LA TECHNIQUE

La morbi-mortalité maternelle est un problème mondial de santé publique selon l'Organisation Mondiale de la Santé (OMS). Le taux mondial de mortalité maternelle de 1990 à 2015 (nombre de décès maternels pour 100 000 naissances vivantes) n'a diminué que de 2,3% par an. Près de 300 000 femmes enceintes meurent chaque année dans le monde, environ 25 %d'entre elles à cause d'hémorragies. Ces hémorragies peuvent dans les autres cas entraîner chez la mère des problèmes médicaux et psychologiques importants à long terme. En France cela concerne 5 à 6 % des 700 000 naissances par an. Il paraît nécessaire de soutenir les programmes de prévention et de diffusion des nouvelles techniques de traitement relatives aux situations à risque, et notamment d'hémostase utérine - c'est-à-dire d'arrêt d'hémorragie utérine - comme le ballon de tamponnement intra-utérin ou la chirurgie utérine d'hémostase telle que le capitonnage utérin décrit par le Pr C B-Lynch et par le Dr Cho.

Cette formation passe notamment par l'utilisation d'appareils de simulation imitant un patient ou une partie anatomique d'un patient (aussi connu sous le terme anglais « *task trainer* » c'est-à-dire en français un système d'entraînement à une tâche ou à un geste). En gynécologie-obstétrique, des simulateurs dédiés permettent de reproduire des situations cliniques d'urgence ou quotidiennes relatives à la grossesse ou à l'accouchement.

La formation est facilitée par une standardisation des mannequins, ce qui les rend financièrement plus accessibles. Ces outils de simulation à visée obstétricale restent cependant insuffisants, particulièrement ceux qui simulent les hémorragies utérines.

Dans ces situations d'hémorragie, la cavité utérine est en état atonique, c'est-à-dire avec une très faible rigidité des tissus, l'utérus ne conservant alors pas sa position normale et saignant abondamment.

Pour améliorer la qualité des soins relatifs à ces situations, il est nécessaire d'améliorer les maquettes pédagogiques d'hémostase utérine, et en particulier de développer un appareil de simulation configuré pour s'insérer dans un grand nombre de mannequins.

### EXPOSE DE L'INVENTION

Un but de l'invention est de proposer un appareil de simulation d'un utérus atonique dépassant les obstacles de l'art antérieur.

Le but est atteint dans le cadre de la présente invention grâce à un appareil de simulation d'un corps utérin atonique après un accouchement l'appareil comprenant une pièce monobloc, la pièce comprenant :
- un corps souple présentant une forme d'un corps utérin atonique après un accouchement, le corps souple étant pliable à la main de sorte que le corps souple reproduit un comportement haptique d'un corps utérin atonique après un accouchement ;
- un col rigide prolongeant le corps souple, le col rigide entourant une ouverture de la pièce, le col rigide présentant une rigidité supérieure à une rigidité du corps souple ;
la pièce définissant une surface externe et une surface interne, la surface interne définissant une cavité interne de la pièce,
la cavité interne débouchant dans la surface externe de sorte à définir l'ouverture.

La pièce monobloc, qui permet de simuler par sa cavité interne un corps utérin, présente un col plus rigide et un corps plus souple. D'une part le col plus rigide permet d'adapter et de fixer l'appareil à un mannequin haute ou basse fidélité, par exemple par déformation du col et son insertion dans une ouverture du mannequin. D'autre part le corps plus souple permet une simulation plus réelle des gestes thérapeutiques d'hémostase utérine nécessitant l'utilisation d'aiguilles et de fil de suture, ainsi que des mouvements de repli et de compression.

Un tel appareil est avantageusement et optionnellement complété par les différentes caractéristiques suivantes prises seules ou en combinaison :
- le col rigide présente une dureté Shore A comprise entre 25 et 35 et le corps souple présente une dureté Shore 00 comprise entre 10 et 20 ;
- la pièce comprend du silicone et la pièce et en particulier la cavité interne présente des dimensions égales à des dimensions d'un corps utérin atonique après un accouchement ;
- la pièce est en matériau composite, la pièce comprenant un premier matériau élastique pour le corps souple, un second matériau élastique pour le col rigide et une couche de renfort d'un textile tissé entre la surface externe et la surface interne ;
- la couche de renfort d'un textile tissé est située plus proche de la surface interne que de la surface externe;
- le textile tissé est du polyester, le textile présentant un grammage supérieur ou égal à 20 g/m² et inférieur ou égal à 25 g/m²;
- le textile tissé présente un maillage compris entre 200 et 400 mailles par centimètre ;
- la pièce présente une épaisseur entre la surface interne et la surface externe, l'épaisseur étant variable le long de la pièce, l'épaisseur prenant une valeur maximale dans le corps souple; et
- l'épaisseur prend en moyenne dans le col rigide une valeur de référence, un rapport entre la valeur maximale et la valeur de référence étant compris entre 1,5 et 2.

L'invention porte également sur un système de simulation d'examen gynécologique comprenant un appareil tel qu'on vient de le décrire, et un dispositif tel qu'un mannequin, comprenant une cavité configurée pour recevoir l'appareil, le dispositif et l'appareil étant configurés pour être rigidement liés.

L'invention porte sur un procédé de simulation de geste thérapeutique, le procédé comprenant une étape de mise en place d'un appareil de simulation d'examen gynécologique tel qu'on vient de le décrire, une étape de manipulation de la surface interne de sorte à réaliser un repli de la surface interne et une étape de suture du repli.

L'invention porte enfin sur un procédé de simulation de geste thérapeutique, le procédé comprenant une étape de mise en place d'un appareil de simulation d'examen gynécologique tel qu'on vient de le décrire une étape d'insertion d'un ballon intra-utérin dans la cavité interne et une étape de gonflement du ballon intra-utérin.

### DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :
Les figures 1, 2 et 3 représentent schématiquement un appareil de simulation d'un corps utérin atonique selon un mode de réalisation de l'invention,
Les figures 4 et 5 représentent schématiquement une partie d'un appareil de simulation d'un corps utérin atonique selon deux modes de réalisation de l'invention,
La figure 6 représente schématiquement un détail d'un système de simulation d'examen gynécologique, et
La figure 7 représente schématiquement un moule détail d'un un appareil de simulation.

### DESCRIPTION DETAILLEE DE L'INVENTION

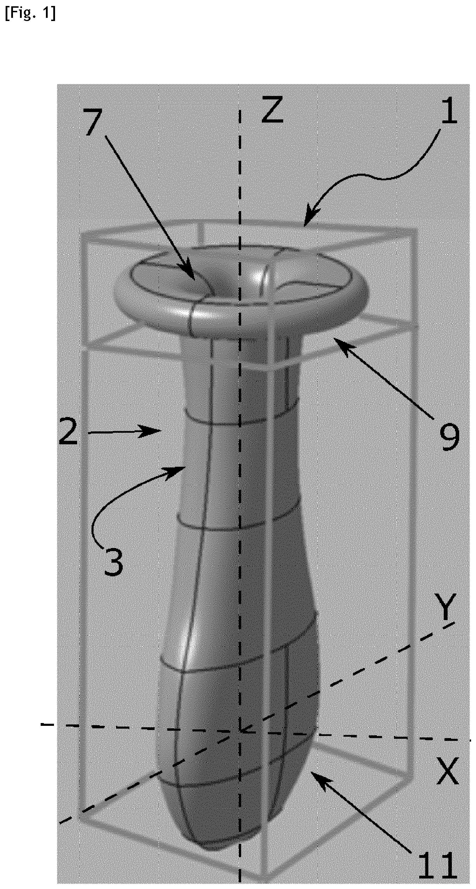

En rapport avec les figures 1, 2, 3 et 4, l'invention porte sur un appareil 1 de simulation d'un corps utérin atonique après un accouchement.

L'appareil 1 comprend une pièce 2 monobloc, c'est-à-dire une pièce d'un seul tenant ou d'un seul bloc. La pièce 2 ne comprend pas de parties détachables ou séparables du reste de la pièce 2.

La pièce 2 comprend un corps souple 11 qui présentant une forme d'un corps utérin atonique après un accouchement. Le corps 11 est qualifié de souple en rapport avec une autre zone de la pièce 2 qui est plus rigide que le corps 11.

Le corps souple 11 est souple au point d'être pliable à la main. En particulier un opérateur peut facilement pincer une première partie du corps et rabattre cette première partie contre une deuxième partie du corps.

Le caractère souple et pliable à la main du corps souple 11 est tel que le corps souple 11 reproduit un comportement haptique d'un corps utérin atonique après un accouchement.

La pièce 2 comprend en outre un col rigide 9. Le col 9 est qualifié de rigide car c'est une zone de la pièce 2 qui est plus rigide que le corps 11. Autrement dit, le col rigide 9 présente une rigidité supérieure à une rigidité du corps souple 11.

Concernant les rigidités, le col rigide 9 peut présenter une dureté Shore A comprise entre 25 et 35 et le corps souple 11 peut présenter une dureté Shore 00 comprise entre 10 et 20.

Le col 9 prolonge le corps souple 11, c'est-à-dire qu'il y a une continuité de matière de la pièce 2 en passant du corps souple 11 au col rigide 9.

La pièce 2 comprend une ouverture 7 située dans le col rigide 9. Plus précisément, le col rigide 9 définit et entoure l'ouverture 7.

Le col 9 peut présenter une forme d'anneau évasé autour de l'ouverture 7, c'est-à-dire une forme d'anneau dont le diamètre augmente vers l'extérieur de la pièce 2.

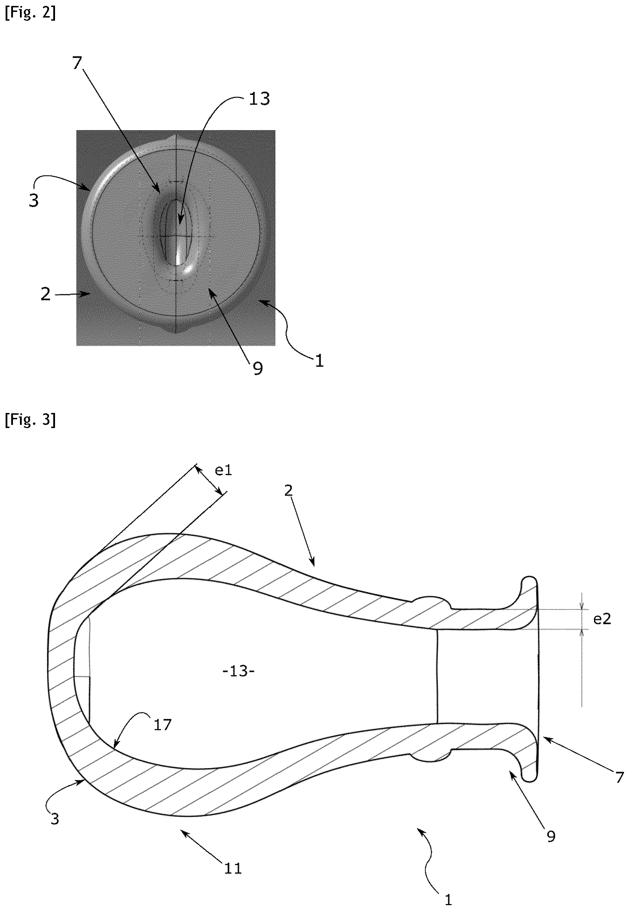

En rapport avec les figures 1 et 3, la pièce 2 définit une surface externe 3 et une surface interne 17. Le corps souple 11 et le col rigide 9 définissent chacun une partie de la surface externe 3 et une partie de la surface interne 17.

En rapport avec les figures 2 et 3, à l'intérieur de la pièce 2, la surface interne 17 définit une cavité interne 13 de la pièce 2.

La cavité interne 13 débouche dans la surface externe 3 de sorte à définir l'ouverture 7. A l'ouverture 7 se rejoignent la surface interne 17 et la surface externe 3.

Le corps souple 11 de l'appareil 1 permet de réaliser des gestes thérapeutiques comme des mouvements de repli de la surface interne dans la cavité interne et des mouvements de compression. Le corps souple restitue ainsi des sensations haptiques proches de la réalité. Il est ainsi possible grâce à cet appareil de former des personnes à des gestes thérapeutiques avec un ressenti proche de la réalité.

Le corps souple 11 peut être transpercé par une aiguille et du fil de suture, et il peut retenir l'aiguille et le fil selon les mêmes propriétés mécaniques d'un corps utérin atonique. A nouveau, une personne formée peut avoir lors de la simulation du geste thérapeutique de suture chirurgicale un ressenti proche de la réalité.

Pour améliorer encore le réalisme de la simulation la pièce 2 peut comprendre du silicone et en outre la pièce 2 et en particulier la cavité interne 13 peuvent présenter des dimensions égales à des dimensions d'un corps utérin atonique après un accouchement. La cavité interne peut notamment présenter un volume compris entre 180 millilitres et 500 millilitres.

Dans cette situation, il est possible de simuler un tamponnement intra-utérin à l'aide d'un ballon de type Cook ou apparenté gonflé à 500 mL d'eau stérile.

Le col rigide 9 de l'appareil 1 permet une adaptation et une fixation de l'appareil 1 sur une zone appropriée d'un mannequin, en particulier dans l'ouverture d'une paroi d'un mannequin qui simule une paroi vaginale. Cette ouverture se trouve classiquement dans tous les mannequins, de haute fidélité comme de basse fidélité, de simulation d'anatomie gynécologique et dédiés à la santé de la femme.

Le col rigide 9 est déformable, c'est-à-dire qu'il est suffisamment souple pour être déformé et placé dans l'ouverture de la paroi d'un mannequin tel que mentionnée plus haut. Il est possible d'intégrer l'appareil dans à peu près tout mannequin de simulation commercialisé.

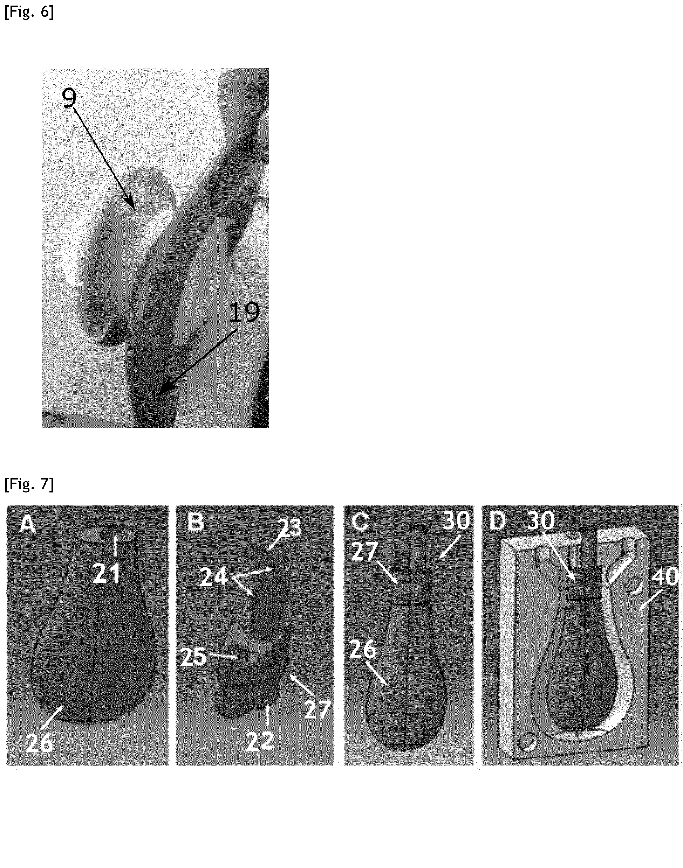

En ce sens, et en rapport avec la figure 6, l'invention couvre également un système de simulation d'examen gynécologique comprenant un appareil 1 tel qu'il est décrit dans la description en général et un dispositif 19, tel qu'un mannequin, le dispositif 19 comprenant une cavité configurée pour recevoir l'appareil 1, le dispositif 19 et l'appareil 1 étant configurés pour être rigidement liés l'un à l'autre. La figure 6 représente une partie du dispositif 19 qui comprend un orifice de la cavité. Le col rigide 9 peut être déformé pour être glissé à travers cet orifice, cet orifice étant par exemple une ouverture de la paroi du mannequin.

Le col rigide 9 et la cavité sont configurées mécaniquement et géométriquement pour une fois que le col rigide 9 est glissé dans la cavité, le col rigide 9 et la cavité sont en contact mécanique l'un avec l'autre.

La dureté Shore du col rigide 9 est choisi pour que le col rigide 9 reste fixe par rapport au dispositif 19 à la cavité, une fois que le col rigide 9 est inséré dans la cavité, sans élément de fixation supplémentaire

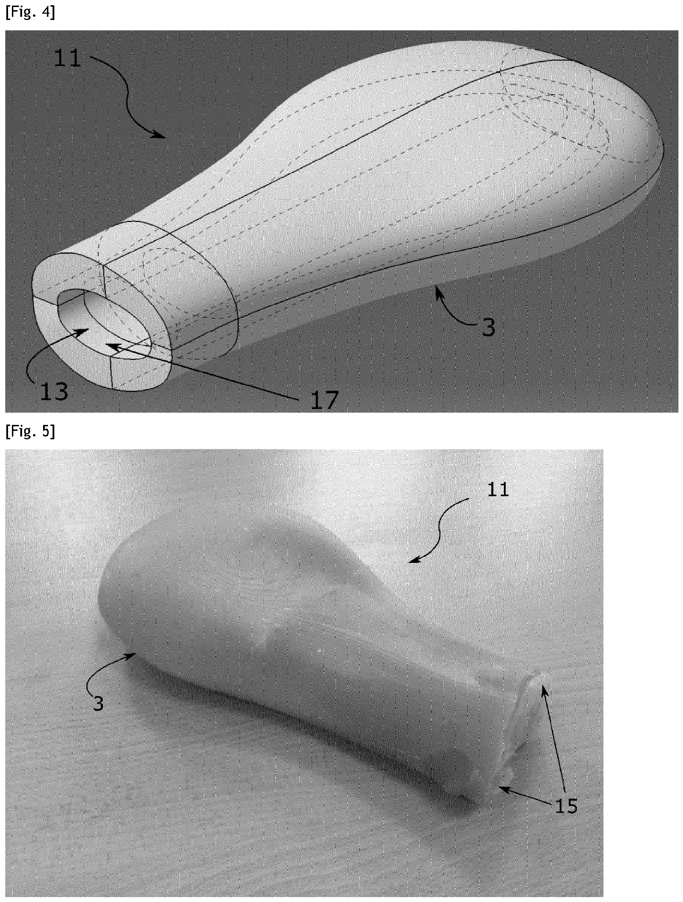

En rapport avec la figure 5 et dans un mode de réalisation particulier de l'appareil, la pièce 2 est en matériau composite et comprend un premier matériau élastique pour le corps souple 11, un second matériau élastique pour le col rigide 9 et une couche de renfort 15 d'un textile tissé, la couche de renfort étant située entre la surface externe 3 et la surface interne 17.

La présence de la couche de renfort 15 contribue à restituer les sensations haptiques proches de la réalité lors des gestes thérapeutiques (compression chirurgicale ou suture chirurgicale). Le renfort permet en particulier de bien simuler la sensation de résistance mécanique lors de l'insertion d'une aiguille dans le corps souple 11.

La présence de la couche de renfort 15 contribue à pouvoir positionner et retenir des fils de suture dans l'opération de maintien de l'utérus, une fois replié (suture chirurgicale).

En particulier, la couche de renfort 15 peut être située plus proche de la surface interne 17 que de la surface externe 3. Par exemple, le textile peut être situé à une distance comprise entre 1 et 2 mm de la surface interne 17.

Le textile tissé utilisé peut être en polyester, le textile présentant un grammage supérieur ou égal à 20 g/m² et inférieur ou égal à 25 g/m².

Le textile tissé peut également présenter un maillage compris entre 200 et 400 mailles par centimètre.

En rapport avec la figure 3, l'appareil 1 tel qu'on a pu le décrire jusqu'à présent comprend la pièce 2 qui présente une épaisseur e1, e2 entre la surface interne 17 et la surface externe 3. Cette épaisseur est définie localement, par exemple selon une direction perpendiculaire à la surface interne 17 et/ou la surface externe 3.

L'épaisseur e1, e2 de la pièce 2 est variable le long de la pièce 2, c'est à dire qu'en deux points de la surface 17, l'épaisseur de la pièce 2 peut prendre des valeurs différentes.

En particulier l'épaisseur prend une valeur maximale e1 dans le corps souple 11. L'épaisseur peut prendre cette valeur dans une zone de plus grande courbure du corps souple 11, c'est-à-dire dans une zone où le rayon de courbure de la surface interne 17 et/ou de la surface externe 3 prend une valeur maximale.

L'épaisseur maximale e1 de la pièce 2 est supérieure à l'épaisseur de la pièce 2 dans le col rigide 9. En particulier, on peut définir une valeur de référence e2 qui est la valeur moyenne de l'épaisseur dans le col rigide 9, et on peut définir un rapport e1/e2 de la valeur maximale e1 sur la valeur de référence e2. On peut choisir de fixer le rapport e1/e2 à une valeur supérieure ou égale à 1,5 et inférieure ou égale à 2.

La pièce 2 de l'appareil peut présenter une forme de goutte de d'eau ou une forme de ballon de baudruche. Cela signifie que la pièce 2 comprend d'une part une première extrémité qui présente une forme plus courbe et d'autre part une deuxième extrémité qui présente une forme plus pointue. Autrement dit à la première extrémité les variations de pente dans les plans tangents à la pièce 2 sont continues, et à la deuxième extrémité il y a une discontinuité dans les variations de pente dans les plans tangents à la pièce 2. La deuxième extrémité présente une pointe.

La pièce 2 s'étend selon une direction principale Z depuis la première extrémité à la deuxième extrémité. La direction principale Z est représentée sur la figure 1.

Autour de la première extrémité, ou extrémité courbe, la pièce 2 est aplatie. En ce sens, la première extrémité est courbe et aplatie. Cette première extrémité est située au bas de la figure 1. Cela signifie que dans un plan perpendiculaire à la direction principale, la pièce 2 présente une largeur dans une première direction transverse et une profondeur dans une deuxième direction transverse perpendiculaire à la première direction transverse, la largeur étant au moins cinq fois supérieure à la profondeur. Le plan perpendiculaire est défini par la première direction transverse Y et la deuxième direction transverse X, les deux directions sont représentées sur la figure 1.

L'ouverture 7 est située à la pointe de la deuxième extrémité. Cette deuxième extrémité est située au haut de la figure 1

L'appareil 1 peut présenter en outre dans la surface externe 3 deux protubérances en forme de veines (et sont alors proches de la seconde extrémité) ou de trompes (et sont alors proches de la première extrémité). Les protubérances sont situées en dehors de la direction principale à égale distance de l'extrémité courbe et aplatie. La première protubérance dite protubérance gauche et la deuxième protubérance droite sont symétriques l'une de l'autre par rapport à la direction principale. La direction principale représente l'axe antéro postérieur du corps humain.

### Simulation de geste thérapeutique

L'invention porte également sur des procédés de simulation de geste thérapeutique.

Un premier procédé de simulation d'une suture chirurgicale comprend
une étape de mise en place d'un appareil 1 de simulation d'examen gynécologique tel qu'on a pu le décrire plus haut,
une étape de manipulation de la surface interne de sorte à réaliser un repli de la surface interne et
une étape de suture du repli.

Le repli peut en particulier être réalisé dans le corps souple 11 suffisamment souple pour réaliser un tel repli à la main.

La suture du repli peut être réalisée en utilisant une aiguille de suture dans le trou de laquelle est enfilé un fil de suture. L'opérateur, en exerçant une pression mécanique pour maintenir le repli, fait passer plusieurs fois l'aiguille à travers le repli, puis il tend le fil de suture de sorte à maintenir le repli en place et empêcher que la surface interne ne se déplie une fois que l'on cesse la pression pour maintenir le repli.

Un deuxième procédé de simulation d'un tamponnement intra-utérin à l'aide d'un ballon de type Cook ou apparenté comprend
une étape de mise en place d'un appareil 1 de simulation d'examen gynécologique tel qu'on a pu le décrire plus haut,
une étape d'insertion d'un ballon intra-utérin dans la cavité interne,
une étape de gonflement du ballon intra-utérin.

### Fabrication de la pièce de l'appareil par moulage

La pièce 2 qui comprend le corps souple 11 et le col rigide 9 peut être réalisé par moulage.

La figure 7 représente un moule de la pièce 2. La figure 7 comprend quatre parties A, B, C et D différentes, chaque partie illustrant une vue différente du moule.

Le moule comprend un moule extérieur 40 qui définit par ses parois internes la surface externe 3 de la pièce 2. Le moule extérieur peut être composé de deux parties amovibles l'une par rapport à l'autre. On peut donc les attacher ensemble lorsqu'elles sont séparées et les détacher l'une de l'autre lorsqu'elles sont attachées ensemble.

Le moule est composé d'un moule intérieur 30 qui définit par ses parois externes la surface interne 17 de la pièce 2.

Le moule intérieur 30 comprend une partie inférieure 26 qui définit par ses parois externes la surface interne 17 du corps souple 11.

La partie inférieure 26 est hydrosoluble. Elle présente un orifice 21 qui permet d'injecter un fluide de sorte à dissoudre la partie inférieure 26.

Le moule intérieur 30 comprend une partie supérieure 27 qui définit par ses parois externes la surface interne 17 du col rigide 9.

La partie supérieure 27 comprend une protubérance 22 adaptée pour être glissée dans l'orifice 21. Cette protubérance est creusée d'un conduit qui traverse également un cylindre 23 de la partie supérieure 27. La partie supérieure est ainsi traversée de part en part par un conduit depuis la protubérance 22 au cylindre 23. Le fluide permettant de dissoudre la partie inférieure 26 peut être injectée dans le cylindre 23 à travers ce conduit jusqu'à l'orifice 21.

La partie supérieure 27 comprend des picots de centrage 24 permettant de placer correctement le moule intérieur 30 par rapport au moule extérieur 40, ainsi qu'un repère 25 permettant le centrage du moule à l'aide d'une seconde tige non illustrée sur la figure 7.

En fonctionnement, pour réaliser une pièce 2, la partie inférieure est placée sous la partie supérieure 27 et correctement ajustée en position grâce à la protubérance 22 et l'orifice 21.

Le moule intérieur 30 ainsi formé est inséré dans une des parties du moule extérieur 40 et correctement ajusté en position grâce :
- au cylindre creux qui s'insère dans un logement ajusté dans le moule extérieur,
- aux picots de centrage 24,
- au repère 25 et la seconde tige.

Unr fois le moule intérieur correctement positionné, la deuxième partie du moule extérieur 40 est attachée à la première partie de sorte à enfermer le moule intérieur 30 dans le moule extérieur 40.

Eventuellement un tissu de renfort, par exemple imbibé d'un silicone shore 00 épaissi à l'aide de silice pyrogènée, est placé entre le moule intérieur 30 et le moule extérieur 40 avant d'attacher la deuxième partie à la première partie du moule extérieur 40.

Un premier silicone moins rigide (dureté Shore inférieure) est versé dans le moule de sorte à remplir une partie de l'espace entre le moule intérieur 30 et le moule extérieur 40. Cette partie de l'espace correspond au corps souple 11. Après une durée de séchage d'environ 20 minutes, un second silicone plus rigide (dureté Shore supérieure) est versé pour remplir le reste de de l'espace entre le moule intérieur 30 et le moule extérieur 40. Ce reste correspond au col rigide 9. Les 20 minutes sont suffisantes pour que le premier silicone ait eu le temps de se solidifier. De cette manière le premier silicone ne se mélange pas avec le deuxième silicone. Après solidification totale, les deux silicones sont solidaires l'un de l'autre et forment ensemble la pièce 2.

Une fois la pièce 2 formée, le fluide permettant de dissoudre la partie inférieure 26 est injectée à travers le cylindre 23. Celui-ci s'écoule dans le conduit jusqu'à l'orifice 21, de sorte à dissoudre la partie inférieure 26.

La partie inférieure 26 dissoute peut alors être extraite du moule extérieur et de la pièce 2 en s'écoulant à travers le cylindre 23.

Les deux parties du moule extérieur 40 sont séparées de sorte à extraire la pièce 2.

## Revendications

1. Appareil (1) de simulation d'un corps utérin atonique après un accouchement l'appareil (1) comprenant une pièce (2) monobloc, la pièce (2) comprenant :
- un corps souple (11) présentant une forme d'un corps utérin atonique après un accouchement, le corps souple (11) étant pliable à la main de sorte que le corps souple (11) reproduit un comportement haptique d'un corps utérin atonique après un accouchement ;
- un col rigide (9) prolongeant le corps souple (11), le col rigide (9) entourant une ouverture (7) de la pièce (2), le col rigide (9) présentant une rigidité supérieure à une rigidité du corps souple (11) ;
la pièce (2) définissant une surface externe (3) et une surface interne (17), la surface interne (17) définissant une cavité interne (13) de la pièce (2),
la cavité interne (13) débouchant dans la surface externe (3) de sorte à définir l'ouverture (7).

2. Appareil (1) selon la revendication 1, dans lequel le col rigide (9) présente une dureté Shore A comprise entre 25 et 35 et le corps souple (11) présente une dureté Shore 00 comprise entre 10 et 20.

3. Appareil (1) selon l'une des revendications 1 à 2, dans lequel la pièce (2) comprend du silicone et dans lequel la pièce (2) et en particulier la cavité interne (13) présente des dimensions égales à des dimensions d'un corps utérin atonique après un accouchement.

4. Appareil (1) selon l'une des revendications 1 à 3, dans lequel la pièce (2) est en matériau composite, la pièce (2) comprenant :
- un premier matériau élastique pour le corps souple (11),
- un second matériau élastique pour le col rigide (2) et
- une couche de renfort (15) d'un textile tissé entre la surface externe (3) et la surface interne (17).

5. Appareil (1) selon la revendication 4, dans lequel la couche de renfort (15) d'un textile tissé est située plus proche de la surface interne (17) que de la surface externe (3).

6. Appareil (1) selon la revendication 4 ou 5 dans lequel le textile tissé est du polyester, le textile présentant un grammage supérieur ou égal à 20 g/m² et inférieur ou égal à 25 g/m².

7. Appareil (1) selon l'une des revendications 4 à 6 dans lequel le textile tissé présente un maillage compris entre 200 et 400 mailles par centimètre.

8. Appareil (1) selon l'une des revendications 1 à 7 dans lequel la pièce (2) présente une épaisseur (e1, e2) entre la surface interne (17) et la surface externe (3), l'épaisseur (e1, e2) étant variable le long de la pièce (2), l'épaisseur (e1, e2) prenant une valeur maximale (e1) dans le corps souple (11).

9. Appareil (1) selon la revendication 8 dans lequel l'épaisseur (e1, e2) prend en moyenne dans le col rigide une valeur de référence (e2), un rapport entre la valeur maximale (e1) et la valeur de référence (e2) étant compris entre 1,5 et 2.

10. Système de simulation d'examen gynécologique comprenant un appareil (1) selon l'une des revendications 1 à 9, et un dispositif (19), tel qu'un mannequin, comprenant une cavité configurée pour recevoir l'appareil (1), le dispositif (19) et l'appareil (1) étant configurés pour être rigidement liés.

11. Procédé de simulation de geste thérapeutique, le procédé comprenant
une étape de mise en place d'un appareil (1) de simulation d'examen gynécologique selon l'une des revendications 1 à 9,
une étape de manipulation de la surface interne de sorte à réaliser un repli de la surface interne et
une étape de suture du repli.

12. Procédé de simulation de geste thérapeutique, le procédé comprenant
une étape de mise en place d'un appareil (1) de simulation d'examen gynécologique selon l'une des revendications 1 à 9,
une étape d'insertion d'un ballon intra-utérin dans la cavité interne et
une étape de gonflement du ballon intra-utérin.
